(19) Europäisches Patentamt
European Patent Office
Office européen des brevets

(11) Veröffentlichungsnummer: **0 313 092 B1**

(12) **EUROPÄISCHE PATENTSCHRIFT**

(45) Veröffentlichungstag der Patentschrift: **01.06.94**

(51) Int. Cl.[5]: **C08F 210/02**, C08F 4/00, //(C08F210/02,218:08,220:14)

(21) Anmeldenummer: **88117609.3**

(22) Anmeldetag: **21.10.88**

Die Akte enthält technische Angaben, die nach dem Eingang der Anmeldung eingereicht wurden und die nicht in dieser Patentschrift enthalten sind.

# (54) Verfahren zur Herstellung von Ethylen-Copolymeren unter erhöhtem Druck.

(30) Priorität: **22.10.87 DE 3735822**

(43) Veröffentlichungstag der Anmeldung:
**26.04.89 Patentblatt 89/17**

(45) Bekanntmachung des Hinweises auf die Patenterteilung:
**01.06.94 Patentblatt 94/22**

(84) Benannte Vertragsstaaten:
**BE DE ES FR GB IT NL SE**

(56) Entgegenhaltungen:
**EP-A- 0 002 764**
**EP-A- 0 003 735**
**EP-A- 0 013 722**
**FR-A- 2 369 298**

**Chemie-Ing.-Techn., 27.Jahrg. 1955/ Nr. 2; S 71 bis 75: Dr.-Ing H. Benzler und A v. Koch:"Ein Zustandsdiagramm für Äthylen bis 10000 ata Druck"**

**International Thermodynamic Tables of the Fluid State, Ethylene, 1972. London, Butterworths, Seiten 196 und 197**

(73) Patentinhaber: **Peroxid-Chemie GmbH**
**Dr.-Gustav-Adolf-Strasse 3**
**D-82049 Pullach(DE)**

(72) Erfinder: **Luft, Gerhard, Prof. Dr.**
**Ludwigstrasse 141 A**
**D-6109 Mühltal(DE)**
Erfinder: **Dorn, Maximilian, Dr.**
**Gistlstrasse 100 A**
**D-8023 Pullach(DE)**
Erfinder: **Fischer, Norbert**
**Bahnhofstrasse 46**
**D-6101 Rossdorf(DE)**

(74) Vertreter: **Huber, Bernhard, Dipl.-Chem. et al**
**Patentanwälte**
**H. Weickmann, Dr. K. Fincke**
**F.A. Weickmann, B. Huber**
**Dr. H. Liska, Dr. J. Prechtel, Dr. B. Böhm**
**Postfach 86 08**
**20**
**D-81635 München (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft ein Verfahren zur Herstellung von Ethylen-Copolymeren unter Verwendung eines Diphenylethanderivats als C-C-labilem Polymerisationsinitiator.

Verfahren zur Polymerisation von ethylenisch ungesättigten Monomeren unter erhöhtem Druck und erhöhter Temperatur sind in einer Reihe von Varianten bekannt. Zur Initiierung der Polymerisationsreaktion werden hierzu Radikal spendende Stoffe wie organische Peroxide, Sauerstoff oder andere Radikalbildner verwendet. Aufgrund der Gefahr der Zersetzung der Comonomeren bei erhöhter Temperatur, muß eine Copolymerisation von Ethylen mit Comonomeren immer bei 50° bis 100°C niedrigeren Temperaturen durchgeführt werden, als sie zur Homopolymerisation angewendet werden. Dies ist insofern von Nachteil, da bei steigender Temperatur bei der Polymerisation die Ausbeute an Polymer zunimmt und somit die erforderliche Reaktionszeit abnimmt.

So beschreibt die US-PS 3,896,099 ein Verfahren zur Polymerisation von ethylenisch ungesättigten Monomeren, bei dem die Polymerisation durch freie Radikale initiiert wird, wobei als Initiator ein 1,1,2,2-Tetracarboalkoxy-diarylethan verwendet wird. Diese Verbindung muß in einer Menge von 0,01 bis 5% gegenüber den Reaktanten eingesetzt werden. Die Reaktionstemperatur liegt bei diesem Verfahren zwischen 40 und 200°C, die Dauer einer 50%igen Umsetzung beträgt etwa 30 Minuten. Die Nachteile dieses Verfahrens liegen darin, daß eine große Menge Initiator eingesetzt werden muß und die erforderliche Reaktionszeit für eine großtechnische Herstellung zu lange ist.

Die DE-OS 24 44 252 beschreibt ein Verfahren zur Ausführung von chemischen Reaktionen, die durch Radikale initiiert werden, wobei als radikalische Initiatoren 1,2-Diaryl-1,2-dicyano-1,2-dihalogenethan-Verbindungen verwendet werden. Die Reaktionstemperatur beträgt bei diesem Verfahren zwischen 40 und 200°C und auch hierbei ist es nötig, die radikalischen Initiatoren in Mengen von 0,01 bis 3 Gew.-% der umzusetzenden Verbindungen, also in relativ großen Mengen, zuzusetzen. Bei diesem Verfahren ist ebenfalls die Reaktionszeit sehr lange, nämlich abhängig vom eingesetzten Initiator für eine 50%ige Umsetzung zwischen 4 und 6 Stunden.

Weiterhin ist es bekannt, zur Initiierung von radikalischen Polymerisationen organische Peroxide zu benutzen. Diese zerfallen bei einer für jedes Peroxid charakteristischen Temperatur exotherm in Radikale, die die Polymerisation auslösen. Ein solcher exothermer Zerfall kann jedoch geradezu explosionsartig auftreten. Vor allem durch Verunreinigungen, wie z. B. Metallspäne oder Rost, können solche exothermen Zerfälle stark katalysiert werden. Auch durch Schlag, Stoß oder Reibung können organische Peroxide zur Explosion gebracht werden. Aufgrund der Explosionsgefahr sind solche organischen Peroxide bei erhöhter Temperatur als alleinige Initiatoren nicht geeignet. Man gibt daher den organischen Peroxiden Substanzen zu, die ihre Gefährlichkeit herabsetzen. Diese Substanzen werden als Phlegmatisierungsmittel bezeichnet.

In der DE-OS 27 57 442 wird ein Verfahren zur Phlegmatisierung organischer Peroxide beschrieben, bei dem die organischen Peroxide als radikalische Polymerisationsinitiatoren in einer Mischung aus 1 bis 99 Gew.-% eines substituierten Diphenylethans und 99 bis 1 Gew.-% eines organischen Peroxids eingesetzt werden. Dies kann jedoch bei 2-Stufen-Polymerisationen, welche in einer ersten Stufe in einem niedrigeren Temperaturbereich und erst in einer zweiten Stufe in einem für das organische Peroxid gefährlichen Temperaturbereich durchgeführt werden muß, unbefriedigend sein.

Aus EP-A-0 002 764 ist ein) Verfahren zur Homo- oder Copolymerisation von Ethylen gegebenenfalls in Gegenwart eines inerten Lösungsmittels bei Temperaturen von 100 bis 350°C und einem Druck von 600 bis 3500 atm in Gegenwart von Initiatoren beschrieben, welches dadurch gekennzeichnet ist, daß man als Initiatoren 1,2-Glykole oder 1,2-Glykol-Derivate verwendet. In den Beispielen werden Initiatorkonzentrationen von mehr als 30 Mol Initiator bezogen auf eine Million polymerisierbare Monomere gelehrt.

Der Erfindung liegt daher die Aufgabe zugrunde, ein Verfahren zur Copolymerisation von Ethylen und weiteren polymerisierbaren Monomeren zur Verfügung zu stellen, das die obengenannten Nachteile des Standes der Technik vermeidet, bei dem eine Erhöhung der Ausbeute und eine Herabsetzung des Initiatorverbrauchs gegenüber bekannten Verfahren erreicht, sowie eine Zersetzung der Monomeren bei den zur Polymerisation verwendeten erhöhten Temperaturen verhindert wird.

Gelöst wird diese Aufgabe erfindungsgemäß durch ein Verfahren zur Herstellung von Ethylen-Copolymeren unter Verwendung eines Diphenylethan-Derivats als C-C-labilem Polymerisations-Initiator, welches dadurch gekennzeichnet ist, daß man als Polymerisations-Initiator bis zu 15 Mol einer Verbindung der allgemeinen Formel

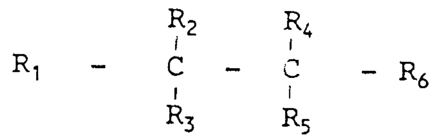 (I),

in der $R_{1-6}$ H, geradkettiges oder verzweigtes Alkyl,Aryl, Aralkyl, Alkylphenyl, substituiertes Alkyl, substituiertes Aryl, -COOH, Ester, Säurenitril, Alkylsilyloxy mit 1 bis 4 C-Atomen, Arylsilyloxy oder Halogen bedeuten, wobei jedes Alkyl 1 bis 10 C-Atome enthalten kann, unter der Voraussetzung, daß mindestens 2 von $R_{1-6}$ Phenyl, oder substituiertes Phenyl sind, bezogen auf eine Million Mol polymerisierbare Monomere, verwendet, wobei man als polymerisierbare Monomere Ethylen und mindestens ein Comonomer versteht, und bei 60.000 bis 350.000 kPa und 130 bis 350 °C polymerisiert.

Durch dieses Verfahren wird es ermöglicht, bei äußerst kurzen Verweilzeiten des Reaktionsgemisches im Reaktor mit niedrigem Verbrauch an Initiator und ohne Zersetzung von Ethylen oder von Comonomeren besonders hohe Ausbeuten an Ethylen-Copolymeren zu erhalten.

Im erfindungsgemäßen Verfahren enthalten als Reste $R_1$-$R_6$ sowohl die geradkettigen oder verzweigten, substituierten oder nicht-substituierten Alkylreste, als auch die in den Aralkyl-, Alkylaryl- oder Alkoxygruppen vorhandenen Alkylreste jeweils 1 bis 10 C-Atome. In der Bedeutung Ester für einen oder mehrere der Reste $R_1$-$R_6$ können sich diese von einer am Grundgerüst der Verbindung der Formel I befindlichen Carboxyl- oder OH-Gruppe ableiten, wobei bevorzugt Alkylester mit 1 bis 8 C-Atomen in der Alkylkette verwendet werden.

Weiter werden im erfindungsgemäßen Verfahren als Reste $R_1$-$R_6$ mit der Bedeutung Aryl insbesondere Phenyl oder Naphthyl verwendet. Substituierte Alkyle oder Aryle als einer oder mehrere der Reste $R_1$-$R_6$ sind bevorzugt mit Halogen, -OH, Alkoxy oder/und Ester ein- oder mehrfach substituiert. Für substituierte Aryle kommt desweiteren als Substituent Fluoren in Betracht.

In einer bevorzugten Ausführungsform der Erfindung polymerisiert man mit 3 bis 7 Mol Polymerisations-Initiator der Formel I, bezogen auf eine Million Mol polymersierbare Monomere.

In einer weiteren bevorzugten Ausführungsform wird zusätzlich zu der Verbindung der allgemeinen Formel I ein weiterer Polymerisations-Initiator, nämlich bis zu 40 Mol eines organischen Peroxids, Sauerstoff oder einer Azoverbindung eingesetzt. Durch diese bevorzugte Ausführungsform der Erfindung wird es ermöglicht, die Polymerisation unter Anwendung von organischen Peroxiden als Polymerisations-Initiatoren auch im Hochtemperaturbereich bis 350 °C, wodurch sich aufgrund der höheren Temperaturen auch höhere Ausbeuten von Polymeren ergeben, auszuführen. Es ist hierbei jedoch nicht nötig, die Verbindung der Formel I und das organische Peroxid in Form einer Mischung zuzugeben, sondern es kann vielmehr bei einem Zweistufenprozeß die Polymerisation in der ersten Stufe bei einer Temperatur im unteren angegebenen Temperaturbereich allein mit dem organischen Peroxid durchgeführt werden und erst in der zweiten Stufe zum Weiterführen der Polymerisation bei einer Temperatur im oberen Teil des angegebenen Temperaturbereichs die C-C-labile Verbindung der Formel I zugegeben werden. Weiter ermöglicht die bevorzugte Ausführungsform der Erfindung zusätzlich zu den Verbindungen der allgemeinen Formel I mit Sauerstoff oder einer Azoverbindung als zusätzlichen Polymerisations-Initiatoren zu arbeiten.

Die benötigten Konzentrationen der beiden Initiatoren sind im erfindungsgemäßen Verfahren sehr niedrig, der Gesamt-Initiatorverbrauch liegt bei 0,1 bis 2 g Initiator pro kg an hergestelltem Polymer. Ein weiterer Vorteil des erfindungsgemäßen Verfahrens ist, daß bei einer nur kurzen Reaktionszeit eine verhältnismäßig hohe Ausbeute an Ethylen-Copolymeren von 15 bis 30 % erreicht wird. Aufgrund der kurzen Reaktionszeiten können in einem kontinuierlich betriebenen Verfahren hohe Durchsatzraten erzielt werden.

Als Verbindungen der allgemeinen Formel I werden im erfindungsgemäßen Verfahren solche Verbindungen verwendet, bei denen mindestens zwei der Reste $R_1$-$R_6$ Phenyl oder substituiertes Phenyl bedeuten. Wenn einer oder mehrere der Reste $R_1$-$R_6$ substituiertes Alkyl oder Aryl bedeuten, sind die Substituenten insbesondere Estergruppen mit 1 bis 8 Kohlenstoffatomen, Halogene oder Alkoxygruppen mit 1 bis 8 Kohlenstoffatomen. Für substituierte Aryle als Reste R kommen desweiteren Fluoren und Alkyl als Substituenten in Betracht.

Beispiele für Verbindungen der allgemeinen Formel I, zur Verwendung im erfindungsgemäßen Verfahren sind

2,3-Dimethyl-2,3-diphenylbutan,

2,3-Dipropyl-2,3-diphenylbutan,

2,3-Dibutyl-2,3-diphenylbutan,

2,3-Dihexyl-2,3-diphenylbutan,
2-Methyl-3-äthyl-2,3-diphenylbutan,
2-Methyl-2,3-diphenylbutan,
2,3-Dimethyl-2,3-di(p-methoxyphenyl)-butan,
2,3-Dimethyl-2,3-di(p-methylphenyl)-butan,
2,3-Dimethyl-2-methylphenyl-3-(p-2',3'-dimethyl-3'-methylphenyl-butyl)-phenyl-butan,
3,4-Dimethyl-3,4-diphenylhexan,
3,4-Diäthyl-3,4-diphenylhexan,
3,4-Dipropyl-3,4-diphenylhexan,
4,5-Dipropyl-4,5-diphenyloctan,
2,3-Diisobutyl-2,3-diphenylbutan,
3,4-Diisobutyl-3,4-diphenylhexan,
2,3-Dimethyl-2,3-di-p(t-butyl)-phenyl-butan,
5,6-Dimethyl-5,6-diphenyldecan,
6,7-Dimethyl-6,7-diphenyldodecan,
7,8-Dimethyl-di(methoxyphenyl)-tetradecan,
1,2-Dichlortetraphenyläthan,
Tetraphenylbernsteinsäuredinitril,
1,2-Dicyano-1,2-diphenylbernsteinsäuredinitril,
1,2-Dicyano-1,2-diphenylbernsteinsäureester
und
Benzpinakolsilylether.

Beispielhaft für im erfindungsgemäßen Verfahren verwendbare organische Peroxide sind:

a) Acetylcyclohexylsulfonylperoxide
b) Peroxydicarbonate wie
Dicyclohexyl-peroxydicarbonat
Di-2-ethylhexyl-peroxydicarbonat
Di-n-butyl-peroxydicarbonat
Di-isopropyl-peroxydicarbonat
c) Perester wie
tert.-Amylperpivalat
tert.-Butylperpivalat
tert.-Butyl-per-2-ethylhexanoat
tert.-Butyl-perneodecanoat
tert.-Butyl-perbenzoat
d) Diacylperoxide wie
Bis-(3,3,5-trimethylhexanonyl)-peroxid
Di-lauroylperoxid
Di-decanoylperoxid
Di-propionylperoxid
Bis-(2,4-dichlorbenzoyl)-peroxid
Dibenzoylperoxid
e) Dialkylperoxide wie
Dicumylperoxid
Di-tert.-amylperoxid
Di-tert.-butylperoxid
tert.-Butylcumylperoxid
Bis-(tert.-butylperoxy-isopropyl)-benzol
f) Perketale wie
1,1-Bis-(tert.-butylperoxy)-trimethyl-cyclohexan
1,1-Bis-(tert.-butylperoxy)-cyclohexan
2,2-Bis-(tert.-butylperoxy)-butan
g) Alkylhydroperoxide wie
Cumylhydroperoxid
tert.-Butylhydroperoxid
h) Ketonperoxide wie
Cyclohexanonperoxid
Methyl-ethyl-ketonperoxid

Methyl-isobutyl-ketonperoxid.

In einer bevorzugten Ausführungsform der Erfindung polymerisiert man mit 3 bis 7 Mol Polymerisationsinitiator und 1 bis 5 Mol organischem Peroxid, bezogen auf eine Mio. Mol polymerisierbare Monomere. In einer weiteren bevorzugten Ausführungsform polymerisiert man mit 3 bis 7 Mol Polymerisationsinitiator und 15 bis 25 Mol Sauerstoff, bezogen auf eine Mio. Mol polymerisierbare Monomere.

Als Comonomere sind im erfindungsgemäßen Verfahren alle mit Ethylen copolymerisierbaren Monomere geeignet. Die folgende Aufstellung zeigt einige Beispiele für solche polymerisierbaren Monomere.

A) Acryl- und Methacrylverbindungen
z. B. Acrylsäure und Methacrylsäure
Acrylsäure- und Methacrylsäurealkylester
(Methylacrylat, Äthylacrylat, Propylacrylat, Isopropylacrylat, n.Butylacrylat, tert.-Butylacrylat, 2-Ethylhexylacrylat, Stearylacrylat und die entsprechenden Methacrylsäurehydroxyalkylester, Acrylsäure- und Methacrylsäureester,
2-Hydroxyethylacrylat
2-Hydroxypropylacrylat
4-Hydroxybutylacrylat und die entsprechenden Methacrylsäureester,
Acryl- und/oder Methacrylsäureallylester
Methylenbisacrylamid
Acryl- und Methacrylsäurevinylester
Acrylnitril und Methacrylnitril
Acrylamid und Methacrylamid
B) Polymerisierbare Vinyl- und Vinylidenverbindungen
z. B. Styrol
kernchlorierte und alkylierte bzw. alkenylierte Styrole (Vinyltoluol, Divinylbenzol, alpha-Methylstyrol, tert.-Butylstyrol, Chlorstyrole)
Vinylester und Carbonsäuren mit 2 bis 6 Kohlenstoffatome (Vinylacetat)
Vinylether (Vinylpropylether, Vinylisobutylether)
Maleinsäureanhydrid
Maleinsäurehalbester mit 1 bis 4 Kohlenstoffatomen in der Alkoholkomponente
Maleinsäurediester
Maleinsäurehalbimide
Maleinsäurediimide oder cyclische Imide
(N-Methylmaleinimid, N-Cyclohexylmaleinimid)
Allylverbindungen
Allylbenzol
Allylester
(Allylacetat, Phthalsäurediallylester, Isophthalsäurediallylester, Malein- und Fumarsäurediallylester, Allylcarbonat, Diallylcarbonate, Diallylphenylcarbonate, Triallylphosphat, Triallylcyanurat und -isocyanurat
Ethylenglykoldiallylether
Vinylpyrrolidon
Vinylchlorid
Vinylidenchlorid
C) Ethylen
D) Konjugierte Diene
z. B. Butadien
Isopren
Chloropren

Bevorzugt wird im erfindungsgemäßen Verfahren als Comonomer Vinylacetat oder/und Acrylsäurenitrilester verwendet.

In einer weiteren bevorzugten Ausführungsform wird die Polymerisation bei 300 bis 350 °C durchgeführt. Der bevorzugte Druckbereich im erfindungsgemäßen Verfahren liegt zwischen 150.000 und 200.000 kPa.

Es ist bei dem erfindungsgemäßen Verfahren außerdem möglich, der Reaktionsmischung weitere gewünschte Zusätze, insbesondere Molekulargewichtsregler, zuzusetzen. Zur Durchführung des erfindungsgemäßen Verfahrens eignen sich die für die Polymerisation von Ethylen unter erhöhtem Druck und erhöhter Temperatur üblicherweise angewandten Vorrichtungen und Verfahrensweisen, wie sie z. B. in "Ullmanns Enzyklopädie der technischen Chemie", Band 19, 4. Auflage, Seiten 167 bis 226, Verlag Chemie, dto. Band 3, 4. Auflage, Seiten 321 bis 326 oder Chem.-Ing.-Techn. 51 (1969), Seiten 960 bis 969 beschrieben sind.

In einer bevorzugten Ausgestaltung der Erfindung wird die Polymerisation in einem Rührautoklaven oder in einem Rohrreaktor, wie sie bei der kontinuierlichen Hochdruckpolymerisation üblich sind, durchgeführt, bei dem die Temperatur des eintretenden Ethylens über einen Wärmeaustauscher reguliert wird. Der Rührautoklav besitzt dabei bevorzugt eine Reaktionskammer mit einem Länge- zu Innendurchmesser-Verhältnis von 2:1.

Die Verweilzeit des Reaktionsgemisches im Reaktor beträgt bevorzugt 10 bis 120 sec., besonders bevorzugt 20 bis 60 sec. Diese kurze Verweilzeit im Reaktor ist ein großer Vorteil des erfindungsgemäßen Verfahrens. Sie führt bei entsprechender Anlagengröße zu einer verbesserten Ausnützung der Anlagen und bei gegebener Anlagegröße damit zu einer erhöhten Produktion. Die Trennung von Polymerisat und nicht umgesetztem Ethylen erfolgt in einer bevorzugten Ausführungsform der Erfindung durch Druckentspannung hinter dem Reaktor.
Nach dem erfindungsgemäßen Verfahren hergestellte Ethylen-Copolymere können für alle Verwendungszwecke solcher Copolymere eingesetzt werden. Ein besonderer Vorteil des erfindungsgemäßen Verfahrens ist neben der hohen Ausbeute an Polymer und dem geringen Initiatorverbrauch auch der niedrige Schmelzindex der erhaltenen Produkte.

Die folgenden Beispiele erläutern die Erfindung weiter.

**Beispiel 1**

Dem Reaktor wird kontinuierlich ein auf 170.000 kPa komprimiertes Gemisch aus 850.000 Gewichtsteilen Ethylen/Stunde, 150.000 Gewichtsteilen Vinylacetat (VA)/Stunde und 42,7 Gewichtsteilen 3,4-Dimethyl-3,4-diphenylhexan (CCDFH)/Stunde (entsprechend 5 Mol bezogen auf 1 Mio. Mol Ethylen und Vinylacetat) zugeführt. Bei einer Reaktortemperatur von 310 °C werden 246.000 Gewichtsteile/Stunde eines Ethylen/Vinylacetat-Copolymeren mit einer Dichte von 0,9225 g/ml nach DIN 53 479 gemessen und einem Schmelzindex von 10,7 g/10 Minuten, nach DIN 53 735 bei 125 °C mit 0,325 kp gemessen, erhalten.

**Beispiel 2**

Dem Reaktor wird kontinuierlich ein auf 170.000 kPa komprimiertes Gemisch aus 850.000 Gewichtsteilen Ethylen/Stunde, 150.000 Gewichtsteilen Vinylacetat (VA)/Stunde und 246 Gewichtsteilen 1,2-Bis-(trimethylsilyloxy)-1,1,2,2-tetraphenylethan (CCTMS)/Stunde (entsprechend 15 Mol, bezogen auf 1 Mio. Mol Ethylen und Vinylacetat) zugeführt. Bei einer Reaktortemperatur von 280 °C werden 153.000 Gewichtsteile/Stunde eines Ethylen/Vinylacetat-Copolymeren mit einer Dichte von 0,9285 g/ml und einem Schmelzindex von 2,4 g/10 Minuten, bei 125 °C mit 0,325 kp gemessen, erhalten.

**Beispiel 3**

Dem Reaktor wird kontinuierlich ein auf 170.000 kPa komprimiertes Gemisch aus 900.000 Gewichtsteilen Ethylen/Stunde, 100.000 Gewichtsteilen Acrylsäuremethylester (MA)/Stunde und 44,3 Gewichtsteilen 3,4-Dimethyl-3,4-diphenylhexan (CCDFH)/Stunde (entsprechend 5 Mol, bezogen auf 1 Mio. Mol Ethylen und Acrylsäuremethylester) zugeführt. Bei einer Reaktortemperatur von 310 °C werden 238.000 Gewichtsteile/Stunde eines Ethylen/Acrylsäuremethylester-Copolymeren mit einer Dichte von 0,9220 g/ml und einem Schmelzindex von 12,6 g/10 Minuten, bei 125 °C mit 0,325 kp gemessen, erhalten.

Vergleichsbeispiel 1A

Dem Reaktor wird kontinuierlich ein auf 190.000 kPa komprimiertes Gemisch aus 900.000 Gewichtsteilen Ethylen/Stunde, 100.000 Gewichtsteile Vinylacetat (VA)/Stunde und 578 Gewichtsteile tert.-Butyl per 2 Ethylhexanoat (TBPEH)/Stunde (entsprechend 75 Mol, bezogen auf 1 Mio. Mol Ethylen und Vinylacetat) zugeführt. Bei einer Polymerisationstemperatur von 240 °C werden 140.000 Gewichtsteile Polyethylen-Copolymer/Stunde mit einer Dichte von 0,9230 g/ml, nach DIN 53 479 gemessen, und einem Schmelzindex von 53 g/10 Minuten, nach DIN 53 735 gemessen, erhalten. Je Kilogramm erzeugtes Polyethylen wurden 4,1 g Initiator eingesetzt.

Vergleichsbeispiel 2A

Es wird genauso verfahren wie im Vergleichsbeispiel 1A, mit dem Unterschied, daß ein Gemisch von 980.000 Gewichtsteilen Ethylen/Stunde, 20.000 Gewichtsteilen Acrylsäuremethylester (MA)/h und 578

Gewichtsteile tert.-Butyl per 2 Ethylhexanoat (TBPEH)/Stunde (entsprechend 75 Mol, bezogen auf 1 Mio. Mol Ethylen und Acrylsäuremethylester) zugeführt wird. Bei einer Polymerisationstemperatur von 234 ° C werden 139.000 Gewichtsteile Polyethylen-Copolymer/Stunde mit einer Dichte von 0,9310 g/ml und einem Schmelzindex von 6,5 g/10 Minuten erhalten. Je Kilogramm erzeugtes Polyethylen-Copolymer wurden 4,2 g Initiator eingesetzt.

Tabelle 1

| Beispiel | 1 | 2 | 3 |
|---|---|---|---|
| Initiator | CCDFH | CCTMS | CCDFH |
| Initiatorkonzentration im Eingang (mol ppm) | 5 | 15 | 5 |
| Comonomer | VA | VA | MA |
| Comonomerkonzentration im Eingang (Gew.-%) | 15 | 15 | 10 |
| Druck (kPa) | 170.000 | 170.000 | 170.000 |
| Reaktortemperatur ( ° C) | 310 | 280 | 310 |
| Reaktormanteltemperatur ( ° C) | 220 | 220 | 220 |
| Verweilzeit (sec.) | 30 | 30 | 30 |
| Ausbeute an Copolymer (%) | 24,6 | 15,3 | 23,8 |
| Initiatorverbrauch (g I/kg PE) | 0,18 | 1,78 | 0,20 |
| Schmelzindex (g/10 min)[1)] | 10,7 | 2,4 | 12,6 |
| Dichte (g/ml) | 0,9225 | 0,9285 | 0,9220 |

[1)] bei 125 ° C mit 0,325 kp gemessen

Tabelle 2

| Vergleichsbeispiel | 1A | 2A |
|---|---|---|
| Initiator | TBPEH | TBPEH |
| Initiatorkonzentration im Eingang (mol ppm) | 75 | 75 |
| Comonomer | VA | MA |
| Comonomerkonzentration im Eingang (Gew.-%) | 10 | 2 |
| Druck (kPa) | 190.000 | 190.000 |
| Reaktortemperatur ( ° C) | 240 | 234 |
| Reaktormanteltemperatur ( ° C) | 170 | 172 |
| Verweilzeit (sec.) | 40 | 40 |
| Ausbeute an Copolymer (%) | 14 | 13,9 |
| Initiatorverbrauch (g I/kg PE) | 4,1 | 4,2 |
| Schmelzindex (g/10 min) | 53 | 6,5 |
| Dichte (g/ml) | 0,9230 | 0,9310 |

## Patentansprüche

**1.** Verfahren zur Herstellung von Ethylen-Copolymeren unter Verwendung eines Diphenylethan-Derivats als C-C-labilem Polymerisations-Initiator,
**dadurch gekennzeichnet,** daß man als Polymerisations-Initiator bis zu 15 Mol einer Verbindung der allgemeinen Formel

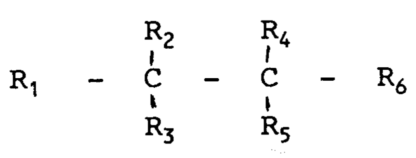

(I)

in der $R_{1-6}$ H, geradkettiges oder verzweigtes Alkyl, Aryl, Aralkyl, Alkylaryl, substituiertes Alkyl, substituiertes Aryl, -COOH, Ester, Säurenitril, Alkylsilyloxy mit 1 bis 4 C-Atomen, Arylsilyloxy oder Halogen bedeuten, wobei jedes Alkyl 1 bis 10 C-Atome enthalten kann, unter der Voraussetzung, daß mindestens zwei von $R_{1-6}$ Phenyl oder substituiertes Phenyl sind, bezogen auf eine Million Mol polymerisierbare Monomere, verwendet, wobei man als polymerisierbare Monomere Ethylen und mindestens ein Comonomer versteht, und bei 60.000 bis 350.000 kPa und 130 bis 350 °C polymerisiert.

**2.** Verfahren nach Anspruch 1, **dadurch gekennzeichnet,** daß Alkyl oder Aryl mit Halogen, -OH, Alkoxy oder/und Ester ein- oder mehrfach substituiert ist.

**3.** Verfahren nach Anspruch 1 oder 2, **dadurch gekennzeichnet,** daß man mit 3 bis 7 Mol Polymerisations-Initiator der allgemeinen Formel I, bezogen auf eine Million Mol polymerisierbare Monomere polymerisiert.

**4.** Verfahren nach Anspruch 1, 2 oder 3,
**dadurch gekennzeichnet,** daß man als weiteren Polymerisations-Initiator zusätzlich bis zu 40 Mol eines organischen Peroxids, Sauerstoff oder einer Azoverbindung, bezogen auf 1 Million Mol polymerisierbare Monomere, einsetzt.

**5.** Verfahren nach Anspruch 4, **dadurch gekennzeichnet,** daß man mit 3 bis 7 Mol Polymerisations-Initiator der Formel I und 1 bis 5 Mol organischem Peroxid, bezogen auf eine Mio. Mol polymerisierbare Monomere, polymerisiert.

**6.** Verfahren nach Anspruch 4, **dadurch gekennzeichnet,** daß man mit 3 bis 7 Mol Polymerisations-Initiator der Formel I und 15 bis 25 Mol Sauerstoff, bezogen auf eine Mio. Mol polymerisierbare Monomere, polymerisiert.

**7.** Verfahren nach einem der Ansprüche 1 bis 6, **dadurch gekennzeichnet,** daß man Comonomere Vinylacetat oder/und Acrylsäuremethylester verwendet.

**8.** Verfahren nach einem der Ansprüche 1 bis 7, **dadurch gekennzeichnet,** daß man bei 300 bis 350 °C polymerisiert.

**9.** Verfahren nach einem der Ansprüche 1 bis 8, **dadurch gekennzeichnet,** daß man bei 150.000 bis 200.000 kPa polymerisiert.

**10.** Verfahren nach einem der Ansprüche 1 bis 9, **dadurch gekennzeichnet,** daß man der Reaktionsmischung zusätzlich Molekulargewichtsregler zusetzt.

**11.** Verfahren nach einem der Ansprüche 1 bis 10, **dadurch gekennzeichnet,** daß man die Polymerisation in einem Rührautoklaven oder Rohrreaktor durchführt, bei dem die Temperatur des eintretenden Ethylens über einen Wärmeaustauscher reguliert wird.

**12.** Verfahren nach Anspruch 11, **dadurch gekennzeichnet,** daß die Verweilzeit des Reaktionsgemisches im Reaktor 10 sec. bis 120 sec. beträgt.

**13.** Verfahren nach Anspruch 12, **dadurch gekennzeichnet,** daß die Verweilzeit des Reaktionsgemisches im Reaktor 20 bis 60 Sekunden beträgt.

**14.** Verfahren nach einem der Ansprüche 1 bis 13, **dadurch gekennzeichnet,** daß die Trennung von Polymerisat und nicht umgesetztem Ethylen durch Druckentspannung hinter dem Reaktor erfolgt.

**Claims**

**1.** Process for the production of ethylene co-polymers with use of a diphenylethyl derivative as C-C labile polymerisation initiator, characterised in that, as polymerisation initiator, one uses up to 15 mol of a compound of the general formula

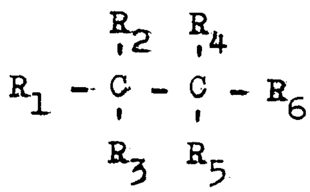

(I)

in which $R_{1-6}$ signify H, straight-chained or branched alkyl, aryl, aralkyl, alkylaryl, substituted alkyl, substituted aryl, -COOH, ester, acid nitrile, alkyl-silyloxy with 1 to 4 C-atoms, arylsilyloxy or halogen, whereby each alkyl can contain 1 to 10 C-atoms, with the proviso that at least two of $R_{1-6}$ are phenyl or substituted phenyl, referred to one million mol of polymerisable monomers, whereby, as polymerisable monomers, one understands ethylene and at least one co-monomer, and polymerises at 60,000 to 360,000 kPa and 130 to 350°C.

**2.** Process according to claim 1, characterised in that alkyl or aryl is substituted one or more times by halogen, OH, alkoxy and/or ester,

**3.** Process according to claim 1 or 2, characterised in that one polymerises with 3 to 7 mol of polymerisation initiator of the general formula I, referred to one million mol of polymerisable monomers.

**4.** Process according to claim 1, 2 or 3, characterised, in that, as further polymerisation initiator, one additionally uses up to 40 mol of an organic peroxide, oxygen or of an azo compound, referred to 1 million mol of polymerisable monomers.

**5.** Process according to claim 4, characterised in that one polymerises with 3 to 7 mol of polymerisation initiator of the formula I and 1 to 5 mol of organic peroxide, referred. to one mio. mol of polymerisable monomers.

**6.** Process according to claim 5, characterised in that one polymerises with 3 to 7 mol of polymerisation initiator of the formula I and 15 to 25 mol of oxygen, referred to one mio. mol of polymerisable monomers.

**7.** Process according to one of claims 1 to 6, characterised in that one uses co-monomers vinyl acetate and/or acrylic acid methyl ester.

**8.** Process according to one of claims 1 to 7, characterised in that one polymerises at 300 to 350°C.

**9.** Process according to one of claims 1 to 8, characterised in that one polymerises at 150,000 to 200,000 kPa.

**10.** Process according to one of claims 1 to 9, characterised in that one additionally adds molecular weight regulators to the reaction mixture.

**11.** Process according to one of claims 1 to 10, characterised in that one carries out the polymerisation in a stirrer autoclave or tubular reactor in which the temperature of the entering ethylene is regulated via a heat exchanger.

**12.** Process according to claim 11, characterised in that the residence time of the reaction mixture in the reactor amounts to 10 to 120 sec.

**13.** Process according to claim 12, characterised in that the residence time of the reaction mixture in the reactor amounts to 20 to 60 seconds.

**14.** Process according to one of claims 1 to 13, characterised in that the separation of polymer and unreacted ethylene takes place by pressure release after the reactor.

## Revendications

1. Procédé de préparation de copolymères d'éthylène par emploi d'un dérivé de diphényléthane en tant qu'amorceur de polymérisation à C-C labile, caractérisé en ce qu'on utilise comme amorceur de polymérisation jusqu'à 15 moles, par rapport à un million de moles de monomères polymérisables, d'un composé de formule générale

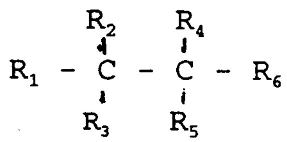

(I)

dans laquelle $R_{1-6}$ signifient H, un alkyle à chaîne droite ou ramifiée, un aryle, un aralkyle, un alkylaryle, un alkyle substitué, un aryle substitué, -COOH, un ester, un nitrile, un alkylsilyloxy avec 1 à 4 atomes de C, un arylsilyloxy ou un halogène, chaque alkyle pouvant contenir 1 à 10 atomes de C, à condition qu'au moins deux des $R_{1-6}$ soient des phényles ou des phényles substitués, moyennant quoi on entend par monomères polymérisables l'éthylène et au moins un comonomère et on polymérise sous 60.000 à 350.000 kPa et de 130 à 350 °C.

2. Procédé selon la revendication 1, caractérisé en ce que l'alkyle ou l'aryle est mono- ou polysubstitué par un halogène, OH, un alcoxy ou/et un ester.

3. Procédé selon la revendication 1 ou 2, caractérisé en ce qu'on polymérise avec 3 à 7 moles d'amorceur de polymérisation de formule générale I, rapportées à un million de moles de monomères polymérisables.

4. Procédé selon la revendication 1, 2 ou 3, caractérisé en ce qu'on utilise en outre comme autre amorceur de polymérisation jusqu'à 40 moles d'un peroxyde organique, d'oxygène ou d'un composé azoïque, rapportées à 1 million de moles de monomères polymérisables.

5. Procédé selon la revendication 4, caractérisé en ce qu'on polymérise avec 3 à 7 moles d'amorceur de polymérisation de formule I et avec 1 à 5 moles de peroxyde organique, rapportées à un million de moles de monomères polymérisables.

6. Procédé selon la revendication 4, caractérisé en ce qu'on polymérise avec 3 à 7 moles d'amorceur de polymérisation de formule I et avec 15 à 25 moles d'oxygène rapportées à un million de moles de monomères polymérisables.

7. Procédé selon l'une des revendications 1 à 6 , caractérisé en ce qu'on emploie les comonomères acétate de vinyle et/ou acrylate de méthyle.

8. Procédé selon l'une des revendications 1 à 7, caractérisé en ce qu'on polymérise de 300 à 350 °C.

9. Procédé selon l'une des revendications 1 à 8, caractérisé en ce qu'on polymérise sous 150.000 à 200.000 kPa.

10. Procédé selon l'une des revendications 1 à 9, caractérisé en ce qu'on ajoute en outre au mélange réactionnel un régulateur de poids moléculaire.

11. Procédé selon l'une des revendications 1 à 10, caractérisé en ce qu'on effectue la polymérisation dans un autoclave à agitation ou dans un réacteur tubulaire, dans lequel la température de l'éthylène qui y pénètre est régulée par l'intermédiare d'un échangeur de chaleur.

12. Procédé selon la revendication 11, caractérisé en ce que le temps de séjour du mélange réactionnel dans le réacteur s'étend de 10 s à 120 s.

13. Procédé selon la revendication 12, caractérisé en ce que le temps de séjour du mélange réactionnel dans le réacteur s'étend de 20 à 60 secondes.

14. Procédé selon l'une des revendications 1 à 13, caractérisé en ce que la séparation du polymère et de l'éthylène non transformé s'opère par détente après le réacteur.